# EUROPEAN PATENT APPLICATION

(11) **EP 2 442 573 A2**
(43) Date of publication of application: **18.04.2012**
(21) Application number: 11185501.1
(22) Date of filing: 17.10.2011
(51) Int. Cl.: H04N 9/31

(54) **Image display device and information processing device including it**

(30) Priority: 15.10.2010 JP 2010232186
(71) Applicant: Panasonic Corporation, Kadoma-shi Osaka 571-8501 (JP)
(72) Inventor: Jikuya, Nobuo, Osaka, 540-6207 (JP); Fujimoto, Hitoshi, Osaka, 540-6207 (JP); Ohtsubo, Kazumi, Osaka, 540-6207 (JP); Kitaoka, Yoshitaka, Osaka, 540-6207 (JP); Aoyagi, Munenori, Osaka, 540-6207 (JP); Araki, Ryousuke, Osaka, 540-6207 (JP)
(74) Representative: Eisenführ, Speiser & Partner

(57) **Abstract**

An image display device and an information processing device that can be incorporated in the computer main body of a notebook computer, etc., and can project an image at any desired angle when the image is projected onto a screen. The image display device includes a first unit storing an optical system displaying an image on a screen and a second unit storing a control board for controlling the optical system, electrically connecting to the first unit, and holding the first unit for rotation. The first and second units are housed in a housing space formed in an information processing device. When the image is projected onto the screen, the first unit is completely exposed from the information processing device and at least a part of the second unit is stored in the information processing device. When the image is not projected onto the screen, the first unit and the second unit are stored in the information processing device.

## Description

### BACKGROUND

### 1. Field of the Invention

This invention relates to an image display device using a semiconductor laser as a light source and an information processing device and in particular to an image display device and an information processing device appropriate to be incorporated in a portable electronic device.

### 2. Description of the Related Art

In recent years, attention has been focused on an art using a semiconductor laser as a light source of an image display device. This semiconductor laser has various advantages that color reproducibility is good, instantaneous lighting is possible, the life is long, power consumption can be decreased with high efficiency, miniaturization is easy, etc., as compared with a mercury lamp often used for conventional image display devices.

The advantage of the image display device using such a semiconductor laser is, in particular, easy miniaturization. Since the image display device is miniaturized, the image display device is convenient to be incorporated in a portable electronic device. For example, an art wherein an image display device is incorporated in a notebook personal computer for enhanced portability and data processed in the personal computer is displayed on a screen is known (JPH8-328487A). Accordingly, ease of use is also provided without connecting the personal computer and the image display device by a line of a cable, etc.

However, in the art described in (JPH8-328487A), the fact that a projector main body is incorporated in a computer main body is only described and how the projector main body is incorporated in the computer main body is not described at all. Since the projector main body always projects from the computer main body, a problem occurs in carrying of the computer main body and there is also a problem in miniaturization of the computer main body. Cooling of heat becoming a problem in the actual use and projection angle adjustment onto a screen are not described at all and it is hard to say that the image display device that can be used practically is disclosed.

### SUMMARY

It is therefore a main object of the invention to provide an image display device and an information processing device that can be incorporated in the computer main body of a notebook computer, etc., and can project an image at any desired angle when the image is projected onto a screen.

To accomplish the object, the invention provides an image display device including a first unit storing an optical system that displays an image on a screen and a second unit storing a control board that controls the optical system, electrically connecting to the first unit, and holding the first unit for rotation. The first and second units are housed in a housing space formed in the information processing device. When the image is projected onto the screen, the first unit is completely exposed from the information processing device and at least a part of the second unit is stored in the information processing device. When the image is not projected onto the screen, the first and second units are stored in the information processing device.

According to the invention, when the image display device is used, namely, when an image is projected onto the screen, the first unit is completely exposed from the information processing device and at least a part of the second unit is stored in the information processing device. When the image display device is not used, namely, when the image is not projected onto the screen, the first unit and the second unit are stored in the information processing device.

Accordingly, when the image display device is used, the first unit storing the optical system generating a large heat amount at the operation time is exposed to the outside of the information processing device, so that the cooling effect for the optical system can be enhanced. When the image display device is not used, the image display device is not projected from the information processing device, so that carrying of the information processing device can be facilitated. Consequently, the image display device that can be stored compactly when it is incorporated in the computer main body of a notebook computer, etc., can be realized.

It is another object of the invention to provide a cabinet housing the first and second units so that they can be inserted and drawn out, whereby the first and second units are easily housed in a housing space formed in a notebook information processing device and to make it possible to replace with a peripheral device of an optical disk unit, etc., because the first and second units are housed in the housing space through the cabinet.

It is another object of the invention to facilitate carrying of an information processing device and prevent erroneous operation at the carrying time as operation keys are exposed from the information processing device when the image display is used, namely, when an image is projected onto a screen.

It is another object of the invention to further enhance the cooling effect for the optical system generating a large heat amount at the operation time as an air cooling fan and the optical system are included in the same unit.

It is another object of the invention to enhance the heat radiation effect of the first unit by radiating heat generated in the optical system in the first unit by the cabinet through the second unit continuously positioned in the same cabinet.

### BRIEF DESCRIPTION OF THE DRAWINGS

In the accompanying drawings:
FIG. 1 is a perspective view to show an example wherein an image display device according to the invention is incorporated in a notebook information processing device;
FIG. 2 is a schematic configuration drawing of an optical engine unit;
FIG. 3 is a perspective view to show the image display device;
FIG. 4 is an exploded perspective view of the image display device;
FIG. 5 is a drawing to show an example wherein the image display device according to the invention is incorporated in the notebook information processing device;
FIG. 6 is a drawing to show an example wherein the image display device according to the invention is incorporated in the notebook information processing device;
FIG. 7 is a drawing to show an example wherein the image display device according to the invention is incorporated in the notebook information processing device;
FIG. 8 is a drawing to show an example wherein the image display device according to the invention is incorporated in the notebook information processing device; and
FIG. 9 is a top view to show the optical engine unit.

### DETAILED DESCRIPTION

Embodiment 1 of the invention will be discussed below with reference to the accompanying drawings.

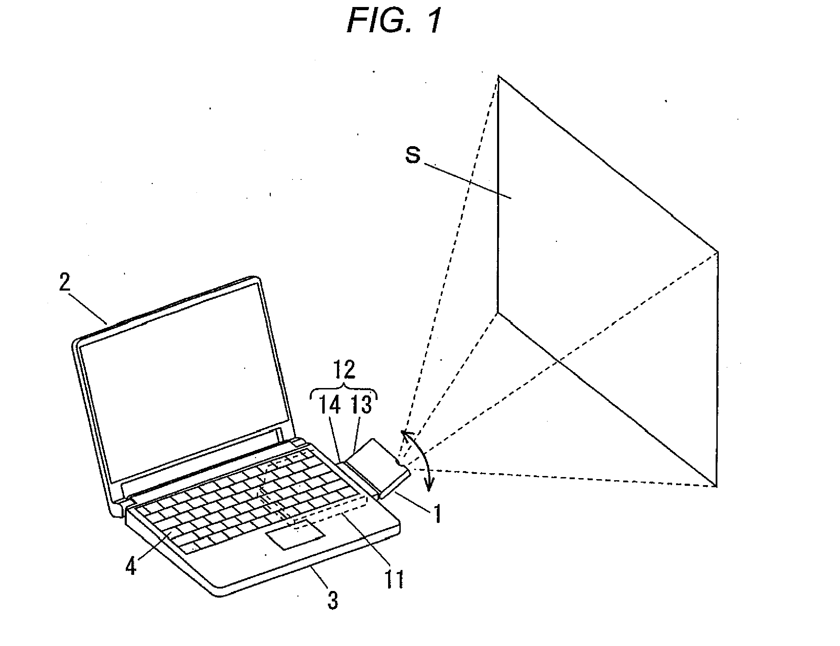

FIG. 1 is a perspective view to show an example wherein an image display device according to the invention is incorporated in a notebook information processing device.

In a main body 3 of an information processing device 2, a housing space in which peripheral devices of an optical disk unit, etc., are housed replaceably, a drive bay is formed on the back side of a keyboard 4, and an image display device 1 is attached to the drive bay.

The image display device 1 has a cabinet 11 and a moving body 12 provided so that it can be inserted into and drawn out from the cabinet 11. The moving body 12 is made up of an optical engine unit (first unit) 13 in which optical components for projecting laser light onto a screen S and a control unit (second unit) 14 in which a board for controlling the optical components in the optical engine unit 13 and the like are housed. The optical engine unit 13 is supported on the control unit 14 for rotation in an up and down direction.

When the image display device 1 is not used, the moving body 12 is stored in the cabinet 11. When the image display device 1 is used, the moving body 11 is drawn out from the cabinet 11, the optical engine unit 13 is rotated, the projection angle of laser light from the optical engine unit 13 is adjusted, whereby the laser light can be appropriately projected onto the screen S.

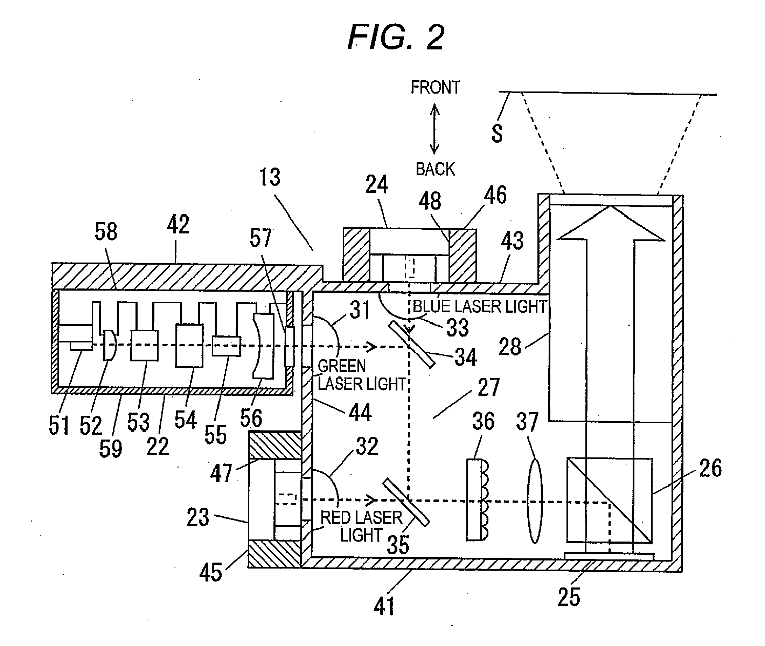

FIG. 2 is a schematic configuration drawing of the optical engine unit.

The optical engine unit 13 includes a green laser light source device 22 for outputting green laser light, a red laser light source device 23 for outputting red laser light, a blue laser light source device 24 for outputting blue laser light, a light modulation element 25 of liquid crystal reflection type for modulating laser light from each of the green laser light source device 22, the red laser light source device 23, and the blue laser light source device 24 in response to a video signal, a polarized beam splitter 26 for reflecting laser light from each of the green laser light source device 22, the red laser light source device 23, and the blue laser light source device 24, applying the laser light to the light modulation element 25, and allowing the modulated laser light emitted from the light modulation element 25 to pass through, a relay optical system 27 for guiding the laser light emitted from each of the green laser light source device 22, the red laser light source device 23, and the blue laser light source device 24 into the polarized beam splitter 26, and a projection optical system 28 for projecting the modulated laser light passing through the polarized beam splitter 26 onto the screen S.

The optical engine unit 13 displays a color image according to a field sequential system, laser light of each color from the green laser light source device 22, the red laser light source device 23, and the blue laser light source device 24 is output in sequence in a time division manner, and an image based on the laser light of each color is recognized as a color image because of the after-image effect of a visual sense.

The relay optical system 27 includes collimator lenses 31 to 33 for converting laser light of each color emitted from the green laser light source device 22, the red laser light source device 23, and the blue laser light source device 24 into parallel beam, first and second dichroic mirrors 34 and 35 for guiding the laser light of each color passing through the collimator lenses 31 to 33 into a required direction, a diffusion plate 36 for diffusing the laser light guided by the dichroic mirrors 34 and 35, and a field lens 37 for converting the laser light passing through the diffusion plate 36 into convergence laser.

Assuming that the side where laser light is emitted from the projection optical system 28 to the screen S is the front, blue laser light is emitted toward the back from the blue laser light source device 24, green laser light and red laser light are emitted from the green laser light source device 22 and the red laser light source device 23 so that the optical axis of the green laser light and the optical axis of the red laser light are orthogonal to each other relative to the optical axis of the blue laser light, and the blue laser light, the red laser light, and the green laser light are guided into the same optical path by the two dichroic mirrors 34 and 35. That is, the blue laser light and the green laser light are guided into the same optical path by the first dichroic mirror 34 and the blue laser light, the green laser light, and the red laser light are guided into the same optical path by the second dichroic mirror 35. Each of the first and second dichroic mirrors 34 and 35 is formed on a surface with a film for transmitting and reflecting laser light of a predetermined wavelength. The first dichroic mirror 34 transmits the blue laser light and reflects the green laser light. The second dichroic mirror 35 transmits the red laser light and reflects the blue laser light and the green laser light.

The optical members are supported in a cabinet 41. The cabinet 41 functions as a radiator for radiating heat generated in the green laser light source device 22, the red laser light source device 23, and the blue laser light source device 24 and is formed of a material having high heat conductivity such as aluminum or copper.

The green laser light source device 22 is attached to an attachment part 42 formed in the cabinet 41 in a state in which the attachment part projects to a side. The attachment part 42 is provided in a state in which it projects in a direction orthogonal to a side wall part 44 from a corner where a front wall part 43 and the side wall part 44 positioned at the front and the back of a housing space of the relay optical system 27 cross each other. The red laser light source device 23 is attached to an outer face side of the side wall part 44 in a state in which it is held on a holder 45. The blue laser light source device 24 is attached to an outer face side of the front wall part 43 in a state in which it is held on a holder 46.

Each of the red laser light source device 23 and the blue laser light source device 24 is implemented as a CAN package and is placed so that an optical axis is positioned on a center axis of an exterior part shaped like a can in a state in which a laser chip for outputting laser light is supported on a stem. Laser light is emitted from a glass window provided in an opening of the exterior part. The red laser light source device 23 and the blue laser light source device 24 are fixed to the holders 45 and 46 by pressing the devices into attachment holes 47 and 48 made in the holders 45 and 46. Heat of the laser chips of the blue laser light source device 24 and the red laser light source device 23 is transmitted to the cabinet 41 through the holders 45 and 46 and is radiated. Each of the holders 45 and 46 is formed of a material having high heat conductivity such as aluminum or copper.

The green laser light source device 22 includes a semiconductor laser 51 for outputting exciting laser light, a FAC (Fast-Axis Collimator) lens 52 and a rod lens of condenser lenses for condensing the exciting laser light output from the semiconductor laser 51, a solid laser element 54 excited by the exciting laser light for outputting basic laser light (infrared laser light), a wavelength conversion element 55 for converting the wavelength of the basic laser light and outputting half-wave laser light (green laser light), a concave mirror 56 forming a resonator together with the solid laser element 54, a glass cover 57 for blocking leakage of the exciting laser light and basic wavelength laser light, a base 58 for supporting the components, and a cover body 59 for covering the components.

The green laser light source device 22 is fixed by attaching the base 58 to the attachment part 42 of the cabinet 41, and a gap of a required width (for example, 0.5 mm or less) is formed between the green laser light source device 22 and the side wall part 44 of the cabinet 41. Accordingly, heat of the green laser light source device 22 becomes hard to propagate to the red laser light source device 23, a temperature rise of the red laser light source device 23 is suppressed, and the red laser light source device 23 having a poor temperature characteristic can be operated stably. To ensure a required optical axis adjustment margin (for example, about 0.3 mm) of the red laser light source device 23, a gap of a required width (for example, 0.3 mm or more) is provided between the green laser light source device 22 and the red laser light source device 23.

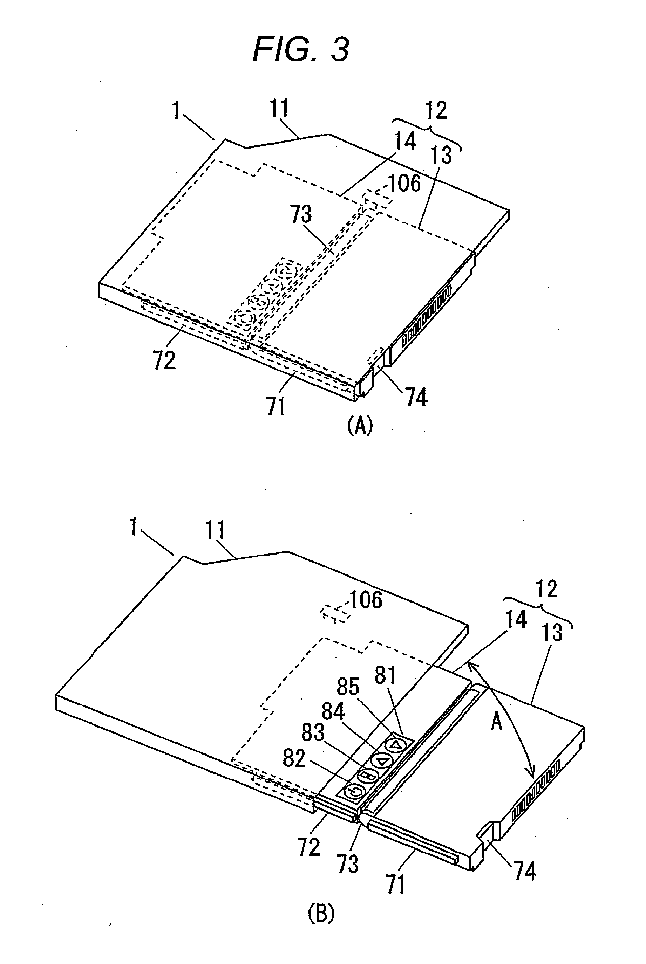

FIG. 3 is a perspective view to show the image display device.

FIG. 3 (A) shows a state when the image display device 1 is not used, namely, when modulated laser light formed by the light modulation element 25 is not projected onto the screen S. At this time, the moving body 12 is stored in the cabinet 11. FIG. 3 (B) shows a state when the image display device 1 is used, namely, when modulated laser light formed by the light modulation element 25 is projected onto the screen S. At this time, the moving body 12 is drawn out from the cabinet 11.

Sliders 71 and 72 sliding along guide rails (not shown) provided in the cabinet 11 are provided in both side margins of the optical engine unit 13 and the control unit 14 making up the moving body 12, and the moving body 11 is inserted into and drawn out from the cabinet 11 by push and pull operation of the user. In addition, a latch lock (not shown) is provided in the cabinet 11 to hold the moving body 12 at the storage position.

The optical engine unit 13 and the control unit 14 are joined through a hinge part 73. In the use state shown in FIG. 3 (B), the control unit 14 is supported on the guide rail of the cabinet 11; the optical engine unit 13 is completely taken out from the cabinet 11 and can rotate relative to the control unit 14 as indicated by an arrow A. The optical engine unit 13 can rotate from a position along the control unit 14 to a roughly upright position relative to the control unit 14 as shown in the figure.

An emission window 74 is provided in an end part on the opposite side to the hinge part 73 in the optical engine unit 13, and laser light passing through the projection optical system 28 shown in FIG. 2 is emitted from the emission window 74. Accordingly, as shown in FIG. 1, the optical engine unit 13 is rotated, whereby the projection angle of laser light can be adjusted.

An operation section 81 is provided on the top face of the control unit 14 as shown in FIG. 3 (B). The operation section 81 is provided with a power operation button (operation part) 82, a brightness switching operation button 83, and two operation buttons 84 and 85 for trapezoid correction. Since the operation buttons 82 to 85 are thus provided on the control unit 14, the operation buttons 82 to 85 do not shake at the operation time and operation of the operation buttons 82 to 85 is facilitated.

The operation section 81 is covered with the cabinet 11 in the storage state shown in FIG. 3 (A) and is exposed in the use state shown in FIG. 3 (B). Accordingly, it is not made possible to operate the operation buttons 82 to 85 until the use state is entered, and erroneous operation of the operation buttons 82 to 85 as the operation buttons 82 to 85 come in contact with another substance, etc., can be circumvented.

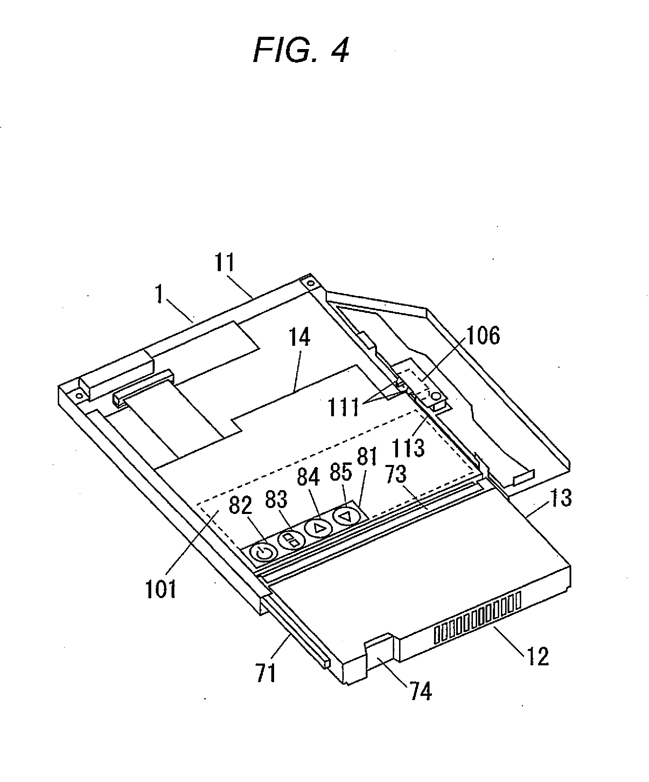

FIG. 4 is an exploded perspective view of the image display device. It is a drawing to show a midway state from the storage state in which the moving body 12 is stored in the cabinet 11 to the use state in which the moving body 12 is drawn out from the cabinet 11. That is, it is a drawing to show a midway state from the state shown in FIG. 3 (A) to the state shown in FIG. 3 (B).

The operation button 82 is an operation part of a switch turned on based on operation of the operator for emitting laser light from the laser light source device. The operation button 82 is exposed to the outside of the control unit 14, is covered with the cabinet 11 in the state shown in FIG. 3 (A) and FIG. 4 and is completely exposed from the cabinet 11 in the state shown in FIG. 3 (B).

Accordingly, when the image display device 1 is used, namely, when an image is projected onto the screen S, the operation button 82 is exposed from the information processing device 2, so that carrying of the information processing device 2 is facilitated and erroneous operation at the carrying time can be prevented.

The optical engine unit 13 contains the green laser light source device 22, the red laser light source device 23, the blue laser light source device 24, and the projection optical system 28. The control unit 14 contains a control section 101 for controlling the green laser light source device 22, the red laser light source device 23, the blue laser light source device 24, and the projection optical system 28.

The moving body 12 is made up of the optical engine unit 13 storing the optical system for displaying an image on the screen and the control unit 14 storing a control board for controlling the optical system in the optical engine unit 13, electrically connected to the optical engine unit 13, and holding the optical engine unit 13 for rotation.

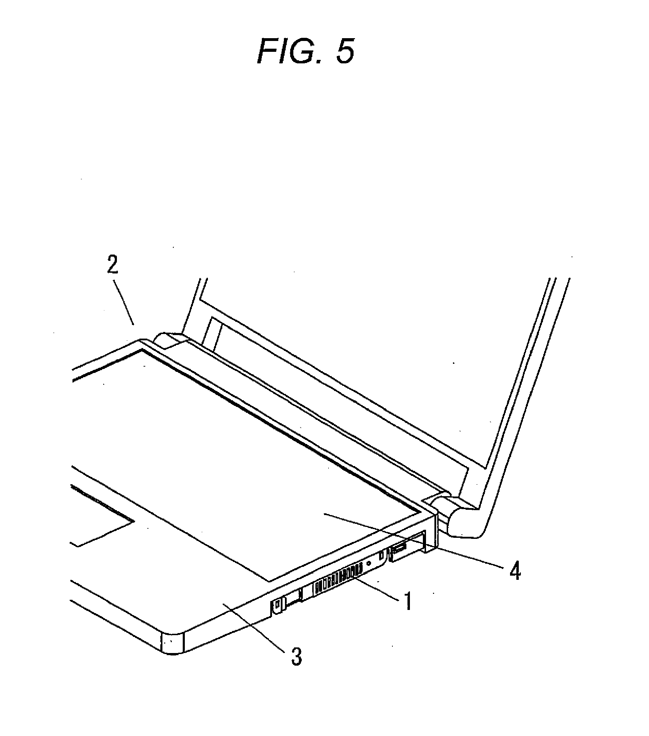

FIGs. 5 to 8 are drawings to show examples wherein the image display device according to the invention is incorporated in the notebook information processing device. FIGs. 5 to 7 correspond to the image display device 1 shown in FIGs. 3 (A), 3 (B), and 4.

In the main body 3 of the information processing device 2, a housing space in which peripheral devices of an optical disk unit, etc., are housed replaceably, a drive bay is formed on the back side of the keyboard 4, and the image display device 1 is attached to the drive bay. The image display device 1 is housed in the housing space formed in the information processing device 2 through the cabinet 11 for housing the optical engine unit 13 and the control unit 14 so that they can be inserted into and drawn out from the cabinet 11. Accordingly, the optical engine unit 13 and the control unit 14 can be easily housed in the housing space formed in the information processing device 2. Since the optical engine unit 13 and the control unit 14 are housed in the housing space through the cabinet 11, it is made possible to replace with a peripheral device of an optical disk unit, etc.

FIG. 5 shows a state when the image display device 1 is not used, namely, when modulated laser light formed by the light modulation element 25 is not projected onto the screen S. At this time, the moving body 12 is stored in the cabinet 11 and thus the optical engine unit 13 and the control unit 14 are stored in the information processing device 2. Thus, when the image display device 1 is not used, the image display device 1 is not projected from the information processing device 2, so that carrying of the information processing device 2 can be facilitated.

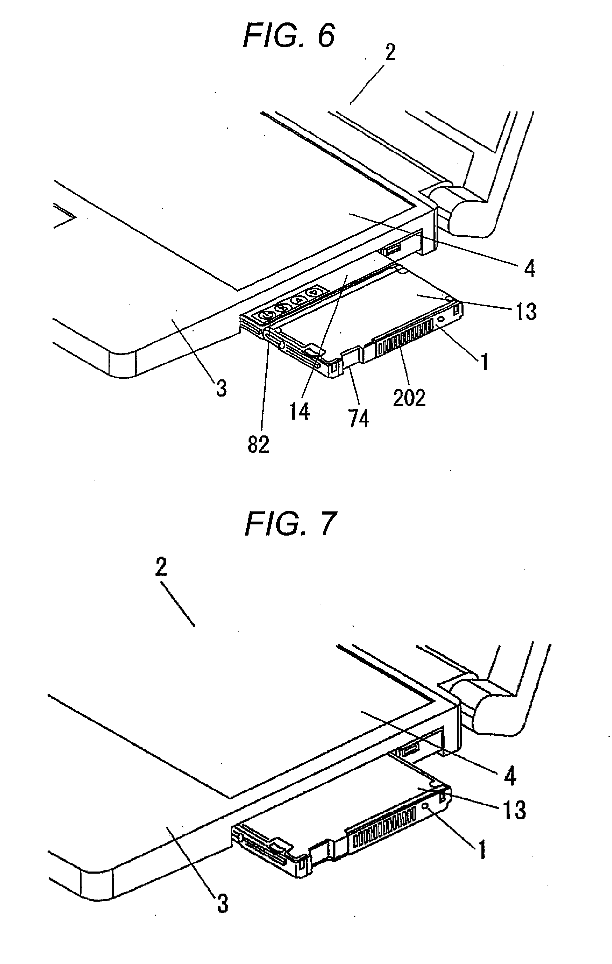

FIG. 6 shows a state when the image display device 1 is used, namely, when modulated laser light formed by the light modulation element 25 is projected onto the screen S. At this time, the moving body 12 is drawn out from the cabinet 11, so that the optical engine unit 13 is completely exposed from the information processing device 2. At least a part of the control unit 14 is stored in the information processing device 2. Thus, when the image display device 1 is used, the optical engine unit 13 storing the optical system generating a large heat amount at the operation time is exposed to the outside of the information processing unit 2, so that the cooling effect for the optical system can be enhanced.

The cabinet 11 shown in FIG. 3 (B) is positioned inside the information processing apparatus 2 shown in FIG. 6, and heat generated in the optical system containing the laser light source devices of the optical engine unit 13 is radiated in the cabinet 11 through the control unit 14. Thus, the cabinet 11 is caused to function as a radiator for radiating the heat generated in the optical system in the optical engine unit 13. Accordingly, the heat generated in the optical system in the optical engine unit 13 is radiated in the cabinet 11 through the control unit 14 continuously positioned in the same cabinet, so that the heat radiation effect of the optical engine unit 13 can be enhanced.

FIG. 7 is a drawing to show a midway state from the state shown in FIG. 5 to the state shown in FIG. 6. In the state in FIG. 7, at least a part of the optical engine unit 13 is exposed from the information processing apparatus 2. If the optical engine unit 13 is not completely exposed from the information processing apparatus 2, the control unit 14 is completely stored in the information processing apparatus 2. If the optical engine unit 13 is completely exposed from the information processing apparatus 2, a part of the control unit 14 is stored in the information processing apparatus 2.

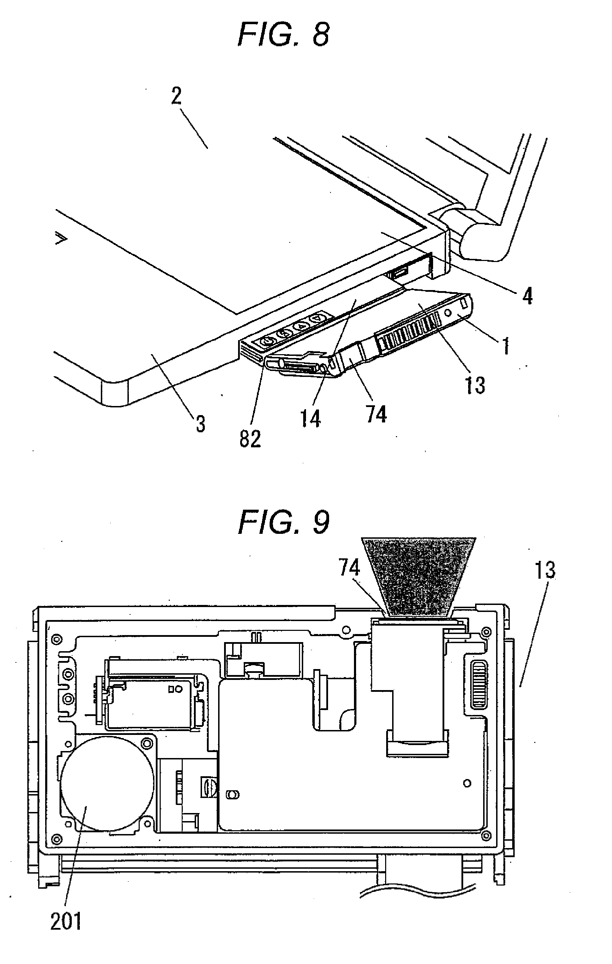

FIG. 8 shows a state in which the optical engine unit 13 rotates relative to the control unit 14.

The optical engine unit 13 is attached rotatably to the control unit 14 using the hinge part 73 shown in FIG. 3 (A). Thus, the optical engine unit 13 can rotate from a position along the control unit 14 to a roughly upright position relative to the control unit 14. The emission window 74 is provided in an end part on the opposite side to the hinge part 73 in the optical engine unit 13, and laser light passing through the projection optical system 28 is emitted from the emission window 74. Accordingly, when modulated laser light is projected onto the screen S, the optical engine unit 13 rotates relative to the control unit 14, so that the angle of the emission window 74 included in the optical engine unit 13 can be adjusted in response to the position of the projection screen S.

FIG. 9 is a top view to show the optical engine unit.

The optical engine unit 13 includes the optical system containing the green laser light source device 22, the red laser light source device 23, and the blue laser light source device 24, and an air cooling fan 201 for cooling the optical system. An intake port exists just below the air cooling fan 201 and an exhaust port exists at the side of the emission window 74. As shown in FIG. 6, if the optical engine unit 13 is completely exposed from the information processing apparatus 2 and the air cooling fan 201 is operated, outer air is taken in from the intake port of the optical engine unit 13, the taken-in air is circulated in the optical engine unit 13, the circulated air is exhausted from an exhaust port 202 to the outside. Accordingly, the air cooling fan 201 and the optical system are included in the same unit, so that the cooling effect for the optical system generating a large heat amount at the operation time can be further enhanced.

As described above, when an image is projected onto the screen S, the optical engine unit 13 is completely exposed from the information processing apparatus 2 and at least a part of the control unit is stored in the information processing apparatus 2 and when an image is not projected onto the screen, the optical engine unit 13 and the control unit 14 are stored in the information processing apparatus 2, so that the cooling effect for the optical system can be enhanced and the image display device 1 and the information processing apparatus 2 that can be stored compactly when they are incorporated in the computer main body of a notebook computer, etc., can be realized.

The image display device and the information processing apparatus according to the invention has the advantages that they can be incorporated in the computer main body of a notebook computer, etc., and when an image is projected onto the screen, the image can be projected at any desired angle, and are particularly useful as an image display device, an information processing apparatus, and the like incorporated in a portable electronic device.

This application claims the benefit of Japanese Patent application No. 2010-232186 filed on October 15, 2010, the entire contents of which are incorporated herein by reference.

FIG. 2
A. FRONT
B. BACK
C. BLUE LASER LIGHT
D. GREEN LASER LIGHT
E. RED LASER LIGHT

## Claims

1. An image display device (1), comprising:
a first unit (13) storing an optical system (22, 23, 24, 25) that displays an image on a screen; and
a second unit (14) storing a control board (101) that controls the optical system, electrically connecting to the first unit, and holding the first unit for rotation,
wherein the first and second units are housed in a housing space formed in an information processing device (2),
wherein, when the image is projected onto the screen, the first unit is completely exposed from the information processing device and at least a part of the second unit is stored in the information processing device, and
wherein, when the image is not projected onto the screen, the first and second units are stored in the information processing device.

2. The image display device as claimed in claim 1, further comprising:
a cabinet (11) housing the first and second units so that the first and second units can be inserted and drawn out,
wherein the information processing device is a notebook information processing device, and the cabinet is housed in a housing space in the notebook information processing device.

3. The image display device as claimed in claim 2, wherein the cabinet functions as a radiator radiating heat generated in the optical system in the first unit.

4. The image display device as claimed in any one of claims 1 through 3, wherein the second unit includes an operation key (82, 83, 84, 85) and
wherein, when the image is projected onto the screen, at least a part of the second unit is stored in the information processing device so that the operation key is exposed from the information processing device.

5. The image display device as claimed in any one of claims 1 through 4, wherein the first unit includes an air cooling fan (201) that is arranged for cooling the optical system.

6. The image display device as claimed in any one of claims 1 through 5, wherein the first unit includes a hinge part (73), and the first and second units are joined through the hinge part.

7. The image display device as claimed in claim 6, wherein when the image is projected onto the screen, the first unit and the hinge part are completely exposed from the information processing device, and
wherein, when the image is not projected onto the screen, the first unit and the hinge part are stored in the information processing device.

8. The image display device as claimed in claim 1, further comprising:
a projection optical system (28) that is arranged for projecting laser light;
a cabinet (11); and
a moving body (12),
wherein the optical system includes a laser light source device (22, 23, 24) that is arranged for emitting the laser light of each color, a light modulation element (25) that is arranged for modulating the laser light emitted from the laser light source device based on a video signal, and the projection optical system projects modulated laser light formed by the light modulation element onto the screen,
wherein the control board includes a control section (101) that is arranged for controlling the laser light source device and the light modulation element,
wherein the cabinet houses the laser light source device, the light modulation element, the projection optical system, and the control section,
wherein the moving body is provided so that the moving body can be inserted into and drawn out from the cabinet, and the cabinet is housed in a housing space formed in the information processing device,
wherein the moving body includes at least the first and second units, the first unit has the laser light source device and the projection optical system, and the second unit supports the first unit for rotation and has the control section,
wherein, when the image is projected onto the screen, the first unit is completely exposed from the information processing device and at least a part of the second unit is stored in the information processing device, and
wherein, when the image is not projected onto the screen, the first and second units are stored in the information processing device.

9. The image display device as claimed in any one of claims 1 through 8, wherein the first unit includes an emission window (74) that is arranged for emitting the laser light from the optical system to the screen,
wherein the second unit includes rotation means (73) supporting the first unit for rotation, and
wherein the first unit rotates from a position along the second unit to a roughly upright position relative to the second unit.

10. The image display device as claimed in any one of claims 1 through 9, wherein the image display device is attached so that the image display device can be inserted into and drawn out from a drive bay formed in a portable information processing device, and
wherein, when the image is projected onto the screen, the optical system is exposed outside the information processing device after the image display device is drawn out from the drive bay.

11. The image display device as claimed in any one of claims 1 through 10, further comprising:
a cabinet housing the first and second units so that the first and second units can be inserted and drawn out,
wherein the first and second units can be housed in the cabinet so that the first and second units can be inserted and drawn out in a mode in which the first unit is completely exposed from the cabinet and at least a part of the second unit is stored in the cabinet and a mode in which the first and second units are stored in the information processing device.

12. An information processing device (2) comprising: the image display device (1) as claimed in any one of claims 1 through 11.

13. An information processing device (2), comprising:
a storage space storing the image display device (1) as claimed in claim 9,
wherein, when the image is projected onto the screen, the first unit is completely exposed from the information processing device and at least a part of the second unit is stored in the information processing device,
wherein, when the image is not projected onto the screen, the first and second units are stored in the information processing device.

14. A portable information processing device (2), comprising:
the image display device (1) as claimed in any one of claims 1 through 11;
wherein the image display device is attached so that the image display device can be inserted into and drawn out from a drive bay formed in a main body of the portable information processing device, and
wherein, when the image is projected onto the screen, the optical system is exposed outside the information processing device after the image display is drawn out from the drive bay.
